# EUROPEAN PATENT APPLICATION

(11) **EP 1 236 946 A1**
(43) Date of publication of application: **04.09.2002**
(21) Application number: 02001570.7
(22) Date of filing: 23.01.2002
(51) Int. Cl.: F16L 19/04, F16L 19/028

(54) **Connection for flared tubes and tube connecting element**

(30) Priority: 16.02.2001 DE 10107246
(71) Applicant: ITT MANUFACTURING ENTERPRISES, INC., Wilmington, Delaware 19801 (US)
(72) Inventor: Stahn, Andreas Bernd, 69231 Rauenberg (DE); Sattler, Frank Karl, 69509 Mörlenbach (DE)
(74) Representative: Dreiss, Fuhlendorf, Steimle & Becker

(57) **Abstract**

A tube installation comprises two tubes (12, 14) which are axially connected and each of which has a flare (32, 34) on its axial end (16, 18) on the connection side. In addition, a connecting element (22) is foreseen, which comprises specifically at least one male tube nut (26) and one female tube nut (24). The connecting device (22) works in conjunction with the tube ends (16, 18) such that they are pressed against each other in an axial direction, at least indirectly. To simplify manufacture of the tube installation (10), it is proposed that at least one annular intermediate element (20) is located between the ends (16, 18) of the two tubes (12, 14), against the end faces of which element the appropriate flares (32, 34) lie so as to form a seal.

## Description

The present invention relates first to a tube installation with two tubes which are connected axially to each other and each of which has a flare at its axial end on the connection side, with a connecting device, specifically at least one male tube nut and one female tube nut, which works in conjunction with the ends of the tubes in such a way that they are pressed against each other in an axial direction, at least indirectly.

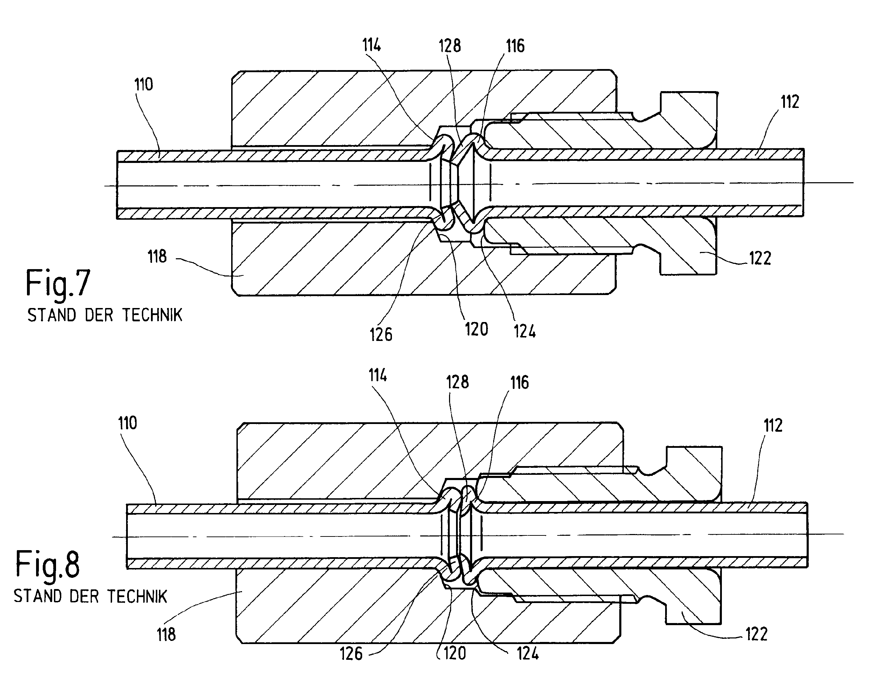

A tube installation of this type is known in connection with a so-called E-F flare connection DIN 74234 (c.f. Figs. 7 and 8). In the case of a tube installation of this type, two tubes 110 and 112 are pressed axially against each other at their end faces. In the area of the ends which are to be connected, each of the two tubes 110 and 112 has a annular external bead 114, 116. A female tub nut 118 with a shoulder 120 bears against one external bead 114, and a male tube nut 122 with an edge 124 against the other bead. Each end of the tubes has a flare 126, 128 respectively which is radially inverted. When the female tube nut 118 and the male tube nut 122 are threaded together, the two flares 126 and 128 are pressed against each other. This is intended to create a leak-free and permanently tight connection between the two tubes 110 and 112.

However, with the tube installation in service, it turned out that when the male tube nut 122 and the female tube nut 118 are drawn up too tightly, the flare 128, which is configured as a type F flare, can tip because the contact surface on the opposite type E flare 126 is too small (c.f. Fig. 7). The consequence is that the connection between the two tubes 110 and 112 is no longer completely leak-free.

The object of the present invention is therefore to further develop a tube installation of the type named at the beginning so that its two tubes form a reliably leak-free but simple connection.

This objective is attained with a tube installation of the type named at the beginning by positioning at least one annular intermediate element between the ends of the two tubes, which has end faces against which the flares lie such as to create a seal.

In the case of the tube installation in accordance with the invention, the two tubes no longer abut directly against each other. To this extent they are pressed only "indirectly" against each other. Instead, an intermediate element is wedged between the two ends that face each other. The end face of the intermediate element facing the appropriate tube end is configured in such a way that it works optimally, that is to say in a sealing manner, in conjunction with the flare which is present on the corresponding tube. The intermediate element itself cannot be deformed so that there cannot be any interaction resulting from deformation of the flares, which can ultimately result in an undesirable deformation of one flare. The intermediate element is preferably one-piece, but a multi-piece version is also conceivable.

The tube installation requires only minimally more space. The manufacture of the tube installation in accordance with the invention is moreover identical for the user to previously known tube installations in which the corresponding flares abut directly against one another. The tube installation in accordance with the invention can ensure a clearly higher degree of leaktightness using the same assembly procedures, which substantially improves process quality when the tube installation in accordance with the invention is used.

Advantageous further developments of the invention are cited in the subclaims.

The initial intention is to give the end faces a conical configuration and to press the flares against the corresponding end faces by means of the connecting device. As a result of the conical configuration, positioning is simplified through automatic centering of the tube ends with the corresponding flares relative to the intermediate element. Additionally, only a low axial force is required to manufacture the sealing seat for the flares at the end faces, so that the connecting device can be made smaller overall.

In the case of a second further development it is stated that a radially inverted flare is present on at least one of the tube ends on the connection side, and the end face of the intermediate element allocated to the flare has a conical recess. So the flare extends axially outward and radially inward. A tube installation of this type turns out relatively small in the radial direction. In addition, the intermediate element can be manufactured inexpensively as a machined part. But it is also entirely possible that the flare is configured to face axially inward and the intermediate element is configured accordingly. A flare facing radially outward and a correspondingly configured intermediate element is also conceivable.

In the case of a flare that is radially inverted at the angle of 115°, or in accordance with DIN 74234, and the matching intermediate element, it is particularly preferred that the aperture angle of the recess on the intermediate element is approximately 120°. An aperture angle of this type corresponds to the typical aperture angle of a chamfered blind hole and can therefore be easily manufactured. Furthermore, with an angle like this the contact pressure between the flares and the end faces of the intermediate element is so high that secure sealing is ensured.

It is also possible that the intermediate element is manufactured from metal, preferably from aluminum and further preferably from Al Zn Mg Cu 1.5. These materials can be worked well. In addition the material properties of aluminum result in a very tight connection.

It is particularly preferred if the intermediate element is held securely against the connecting device to prevent detachment, specifically to the female tube nut. As a result of this further development of the tube installation under the invention, assembly of the tube installation is simplified considerably, because the user does not have to handle the intermediate element separately to assemble the tube installation.

So it is proposed under the invention that an annular space is created in the connecting device, specifically in the female tube nut, in which the intermediate element is located at least over an area and preferably with some axial clearance. An annular space of this kind can easily be imagined, for example, in the female tube nut, because space has to be available anyway in the female tube nut in which the intermediate element can be present in the finished tube installation.

It is particularly preferred if the annular space on the connection side is bounded by a stamped-in or staked ring or by at least a tab. The inside diameter of the ring must be only marginally smaller than the minimum outside diameter of the intermediate element in order to be able to retain it securely in the annular space. A ring of this type is not a hindrance during the subsequent assembly of the tube installation and secures the intermediate element against falling out of the connecting device, for example, during shipment.

It is further proposed that the axial ends of the tubes on the connection side each have an external bead which the connecting device can grip. An external bead of this type can easily be created when the flares are being formed. In this way the possibility is created in the immediate proximity of the flares for the connecting device to grip the specific tube. As a result, the forces introduced into the particular tube during assembly are kept as low as possible.

It is particularly preferred if the tubes each have a type E or type F flare on their ends on the connection side. Flares of this type are common in the automobile industry, for example. As a result of the tube installation being able to have the same flares on their respective end faces, namely two type F flares or two type E flares in each case, manufacturing costs for the tube installation are reduced considerably, because one machine tool suffices to manufacture both flares.

It is also proposed that the angle between one end face on the intermediate element and the radius line is slightly larger than the angle between the flange allocated to this end face and the radius line. In this way the elastic properties of the tubes and the corresponding flares are utilized particularly well to form a seal between flare and intermediate element.

The invention also relates to a tube element with one tube having a flange on at least one axial end and having a connecting device located at this end, specifically a threaded connection.

In order to connect a tube element of this kind particularly easily to another tube element, it is proposed under the invention that an annular, rigid intermediate element, whose end faces are configured conically, is retained in the connecting device and approximately coaxial to it so that the element cannot be lost. Additional developments of a tube element of this kind are given in the subclaims.

One embodiment of the invention is explained in detail below with reference to the attached drawing. In the drawing:
Figure 1 shows a longitudinal section through a first embodiment of a tube installation;
Figure 2 shows a longitudinal section through a tube element, with one tube, an intermediate element and a female tube nut from the tube installation in Fig. 1;
Figure 3 shows a section through details of the tube element from Fig. 2;
Figure 4 shows a section through the intermediate element of the tube element from Fig. 3;
Figure 5 shows a section through the threaded connection of the tube element from Fig. 1;
Figure 6 shows a longitudinal section through a second embodiment of a tube installation; and
Figures 7 and 8 show longitudinal sections through a tube installation known from the prior art.

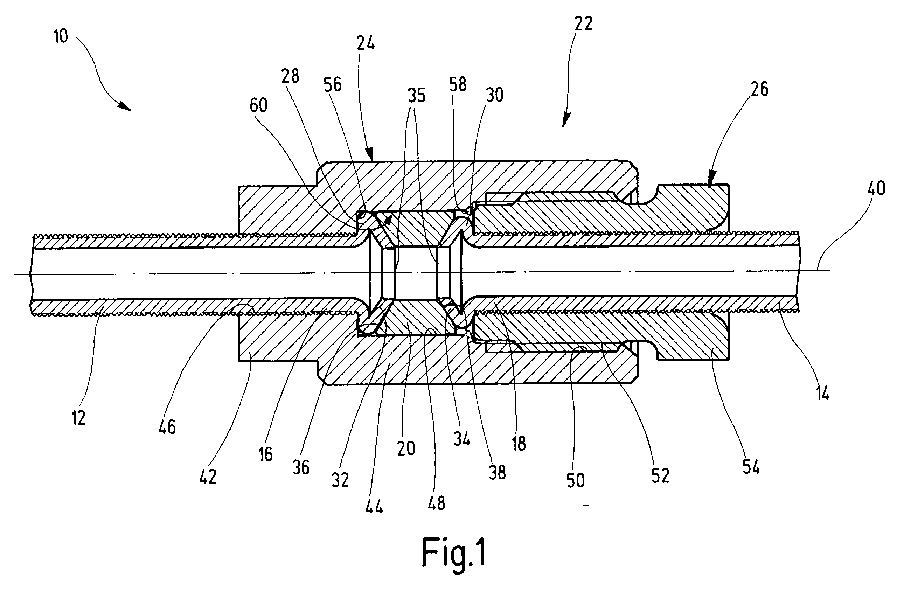

In Figure 1 a first embodiment of a pipe installation bears the overall reference numeral 10. It comprises two basically identical pipes 12 and 14, which are arranged axially in alignment with each other. An intermediate element 20 is positioned between the end sections 16 and 18 of the pipes 12 and 14. The pipes 12 and 14 are pressed against one another by means of a connecting device 22, which in turn consists of a female tube nut 24 and a male tube nut 26.

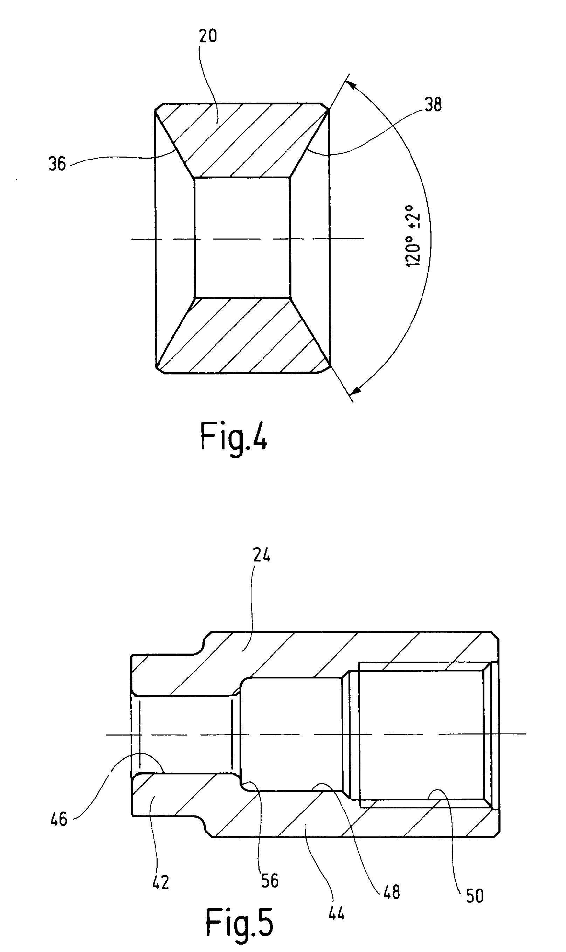

The end sections 16 and 18 of the tubes 12 and 14 each exhibit an annular bead 28 and 30 respectively which faces radially outward and is set back somewhat from the axial end shown in Fig. 1. A radially inverted and axially outward pointing Type F flare 32 or 34 immediately adjoins the bead 28 or 30 of the pipes 12 or 14. The flares 32 or 34 form an angle of a little more than 30° with the radius lines 35 of the respective pipes 12 or 14. The end faces of the intermediate element 20 facing the flares 32 or 34 of the pipes 12 or 14 are in turn configured as conical recesses 36 or 38 (c.f. Fig. 4). The opening angle of the two recesses 36 or 38 is approximately 120°. The radial outside surface and the radial inside surface of the intermediate element 20 are axially parallel to the longitudinal axis 40 of the pipe installation 10. The inside diameter of the intermediate element 20 is the same as the inside diameter of the pipes 12 or 14. The intermediate element is manufactured as a machined part from an aluminum alloy Al Zn Mg Cu 1.5.

The female tube nut 24 (c.f. Fig. 5) is similarly a cylindrical machined part or extruded part. On the outside it comprises a hexagon section 42, which a tool can grip. A hexagon would be possible along the entire length of the female tube nut 24. On the inside the female tube nut 24 is furnished with a stepped bore, with a guide section 46 on the extreme left in Fig. 1, a center section 48 roughly in the middle and a threaded section 50. The inside diameter of the guide section 46 approximately matches the outside diameter of the pipe 12, with some clearance. The inside diameter of the center section 48, likewise with some clearance, approximately matches the outside diameter of the intermediate element 20. The threaded section 50 in turn acts in conjunction with a matching threaded section 52 on the male tube nut 26, whose inside diameter in turn approximately matches the outside diameter of the pipe 14. In Fig. 1 the male tube nut 26 exhibits a hexagon section 54 on the extreme right-hand side, over which a tool can similarly be fitted.

Since the center section 48 of the stepped bore in the female tube nut 24 has a larger diameter than the guide section 46, a shoulder is provided between these two sections. Its function will be described in greater detail below. In the transition area between the center section 48 of the bore in the female tube nut 24 and the threaded section 52, which has a larger diameter than the center section 48, a radially inverted ring 58 is formed by staking (c.f. Fig. 3). In the area of the center section 48 of the stepped bore in the female tube nut 24 an annular space 60 is created by the ring 58 in which the intermediate element 20 is seated with axial clearance, but secure against detachment.

The pipe installation 10 is produced in the following manner:

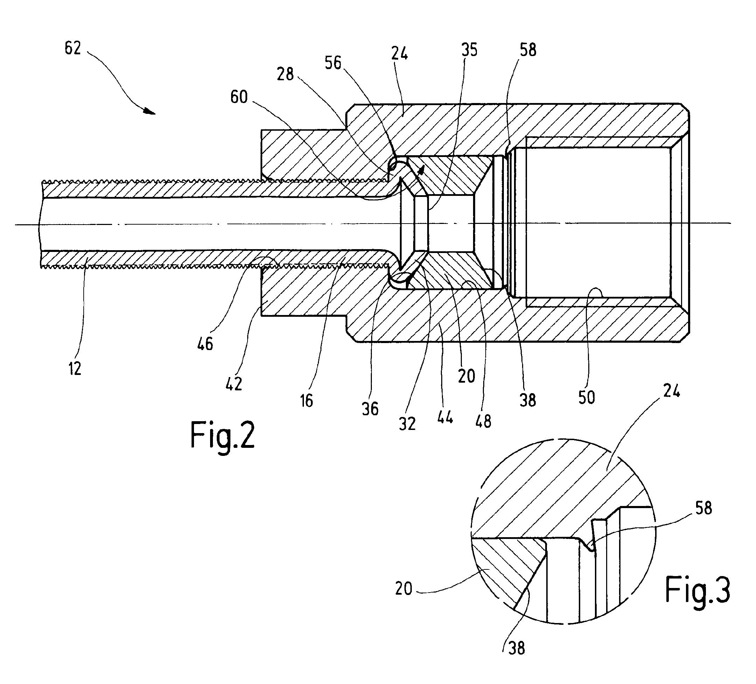

First the female tube nut 24, still without ring 58, is installed over the tube 12 from the end of the tube 12, which is not shown in the drawing, up to the end section 16, which is shown in the drawing. Then the intermediate element 20 is inserted through the threaded section 50 of the stepped bore in the female tube nut 24 into the center section 48 of the stepped bore in the female tube nut 24. Next the ring 58 is created by staking. In this way the preassembled tube element 62 shown in Fig. 2 is produced. The intermediate element 20 is axially secured in the center section 48 of the stepped bore in the female tube nut 24 by the ring 58, and as a result the female tube nut 24 itself is retained against the tube 12 secure against detachment. It should be pointed out at this juncture that in place of the ring 58 just a single tab can be staked or stamped, which secures the intermediate element 20 in the center section 44 of the guide bore in the female tube nut 24.

In order to produce the tube installation 10 shown in Fig. 1, the male tube nut 26 is installed over the end of the tube 14, which is not shown in the drawing, and the tube 14 is inserted with its flare 34 first into the threaded section 50 of the female tube nut 24. Then the male tube nut 26 is tightened to the female tube nut 24. As this happens, the shoulder 56 formed between the guide section 46 and the center section 48 of the stepped bore in the female tube nut 24 engages the bead 28 of the tube 12. In the same manner, the left end of the male tube nut 26 in Fig. 1 engages the bead 30 of the tube 14. In this way the two tubes 12 and 14 are pushed in an axial direction against the intermediate element 20.

The flares 32 and 34 of the tubes 12 and 14 seat against the conical recesses 36 or 38 respectively at the intermediate element 20. As a result of the angle of the conical recess 36 or 38 respectively at the intermediate element 20 and the radius line 35 being marginally smaller than the angle between the flare 32 or 34 assigned to this conical recess and the radius line 35, the flares 32 and 34 are deformed, that is to say basically elastically, when the female tube nut 24 and the male tube nut are tightened together. However, the maximum deformation is limited, even under high contact pressure of the flares 32 or 34 against the corresponding conical recesses, as a result of the conicity of the recesses 36 or 38 respectively. Any tipping of the flares 32 and 34 because of excessive tightening of the female tube nut 24 with the male tube nut 26 is eliminated in the case of this tube installation. The integrity of the leak- proof connection between the two tubes 12 and 14 is ensured in every instance with the tube installation 10.

In addition the tube installation 10 can be manufactured very economically, since different flares are not required for the two tubes 12 and 14. Instead, identical flares, for example Type E or Type F, can be used on both tubes. So only a single machine tool is required for the manufacture of the two tubes 12 or 14 respectively. As a result of the tube element 62 being pre-assembled, warehousing of the elements needed for the production of the tube installation 10 is further simplified, and final assembly of the tube installation 10 is also made easier since only a few loose parts have to be handled.

Now a second embodiment of a tube installation 10 is examined. Those parts whose function is the same as parts from the preceding embodiment have the same reference numeral and are not explained in detail again.

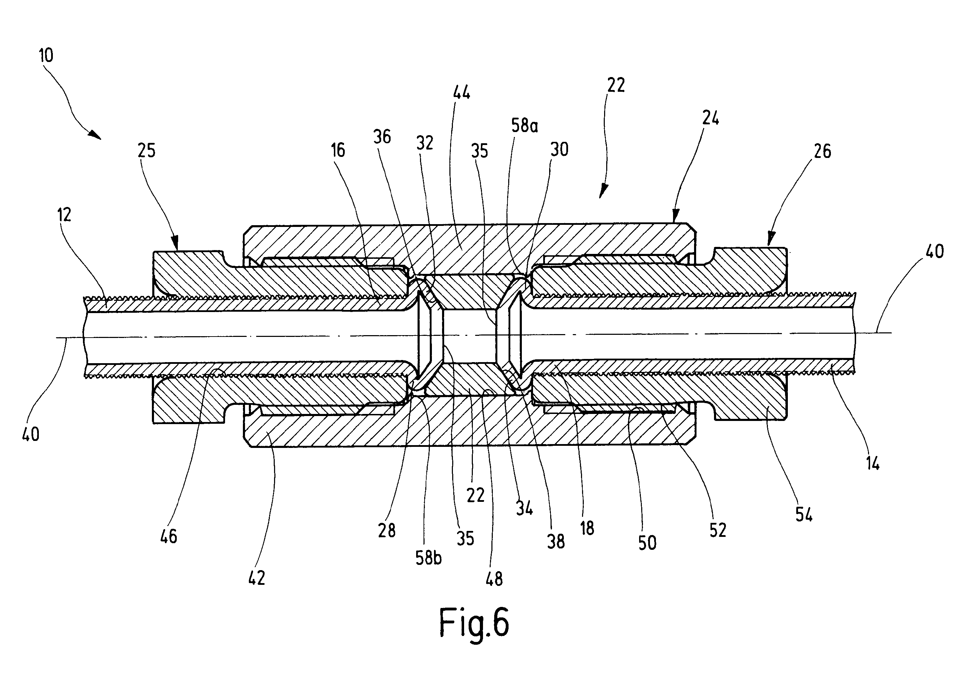

The tubes 12 and 14 of the tube installation 10 and the intermediate element 20 are identical to the preceding embodiment. The connecting device 22 on the other hand is designed differently. The male tube nut 26 shown in the figure on the right side is still configured the same as in Figures 1 to 6, but not the remaining elements of the connecting device: instead of a female tube nut which is installed over the tube 12, a second male tube nut 25 is provided in Figure 6, which is identical to male tube nut 26, but in contrast it has an opposite thread (no reference numeral) (so if male tube nut 26 has a right-hand thread, the male tube nut 25 has to have a left-hand thread).

Both male tube nuts 26 and 25 are connected to each other by threaded sections 42 and 50 of a union nut 24. An annular space 60 is created in an unthreaded center section 44 of this union nut 24 axially centered by means of two rings 58a and 58b, in which the intermediate element 20 is retained with some axial clearance and secured against detachment. The tube installation 10 shown in this embodiment is particularly easy to assemble if the two male tube nuts 25 and 26 are axially moveable with respect to the tubes 12 and 14, but are rotationally fixed. In this case the leak-proof connection between two stationary tubes can be produced by using a tool (for example, a pipe flare wrench) only on the union nut 24.

## Claims

1. Tube installation (10) with two tubes (12, 14) which are axially connected to each other and each of which has a flare (32, 34) at its axial end on the connection side (16, 18), having a connecting device (22), specifically at least one male tube nut (26) and one female tube nut (24), which works in conjunction with the ends (16, 18) of the tubes in such a way that the latter are pressed against each other in an axial direction at least indirectly, **characterized in that** at least one annular intermediate element (20) which has end faces (36, 38) against which the flares (32, 34) lie to form a seal, is located between the ends (16, 18) of the two tubes (12, 14).

2. Tube installation (10) in accordance with claim 1, wherein the end faces (36, 38) are configured conically and the flares (32, 34) are pressed by means of the connecting device (22) against the corresponding end faces (36, 38).

3. Tube installation (10) in accordance with claim 2, wherein a radially inverted flare (32, 34) is present on at least one of the tube ends (16, 18) on the connection side, and the end face of the intermediate element (20) allocated to the flare (32, 34) has a conical recess (36, 38).

4. Tube installation (10) in accordance with claim 3, wherein the aperture angle of the recess (36, 38) at the intermediate element (20) is approximately 120°.

5. Tube installation (10) in accordance with one of the preceding claims, wherein the intermediate element (20) is made of metal, preferably of aluminum, and further preferably from Al Zn Mg Cu 1.5.

6. Tube installation (10) in accordance with one of the preceding claims, wherein the intermediate element (20) is retained securely against detachment to the connecting device (22), specifically to the female tube nut (24).

7. Tube installation (10) in accordance with claim 6, wherein an annular space (60) is formed in the connecting device (22), specifically the female tube nut (24), in which the intermediate element (20) is seated at least over an area and preferably with axial clearance.

8. Tube installation (10) in accordance with claim 7, wherein the annular space (60) is bordered on the connection side by a stamped or staked ring (58) or by at least a tab.

9. Tube installation (10) in accordance with one of the preceding claims, wherein each of the axial ends (16, 18) on the connection side of the tubes (12, 14) has an external bead (28, 30) with which the connecting device (22) engages.

10. Tube installation (10) in accordance with claim 9, wherein each of the tubes (12, 14) has a Type E or a Type F flare (32, 34) on its end (16, 18) on the connection side.

11. Tube installation (10) in accordance with one of the preceding claims, wherein the angle between one end face (36, 38) at the connecting device (20) and the radius line (35) is marginally smaller than the angle between the flare (32, 34) allocated to this end face (36, 38) and the radius line (35)

12. Tube element (62) with a tube (12) with a flare (32) on at least one axial end (16) and with at least one part (24) allocated to this end (16), specifically a union nut (24), a connecting device (22), **characterized in that** an annular intermediate element (20) is retained approximately coaxial to it and secured against detachment.

13. Tube element (62) in accordance with claim 12, wherein an annular space (60) is created in the part (24), in which the intermediate element (20) is seated at least over an area and preferably with axial clearance.

14. Tube element (62) in accordance with claim 13, wherein the annular space (60) is bounded on the connection side by a stamped or staked ring (58) or by at least a tab.
